# EUROPEAN PATENT APPLICATION

(11) **EP 4 712 645 A1**
(43) Date of publication of application: **18.03.2026**
(21) Application number: 23936130.6
(22) Date of filing: 11.05.2023
(51) Int. Cl.: H04W 72/21

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2023/093594
(87) International publication number: WO 2024/229814

(57) **Abstract**

Provided in the present disclosure are a communication method and apparatus, and a storage medium. The method comprises: according to the type of a hybrid automatic repeat request acknowledgement (HARQ-ACK) codebook, determining whether to send, to a network device, HARO-ACK feedback information corresponding to a first semi-persistent scheduling physical downlink shared channel (SPS PDSCH), wherein the time-domain position of the first SPS PDCH is located within an inactive period of cell discontinuous transmission (DTX) of the network device. In the method of the present disclosure, when a network device is in an inactive period of DTX, a user equipment can process a HARQ-ACK feedback of an SPS PDSCH in different ways according to the type of a HARO-ACK codebook, such that the energy consumption of the user equipment can be reduced in an appropriate scenario, or interaction with the network device in a timely manner can be maintained.

## Description

### TECHNICAL FIELD

The disclosure relates to the field of wireless communication technologies, and in particular to a method and an apparatus for communication, and storage medium.

### BACKGROUND

A network energy saving project aims to study technologies for reducing energy consumption of network devices. One possible network energy saving method is discontinuous transmission (DTX) of a cell base station.

### SUMMARY

The disclosure provides a method and an apparatus for communication, and storage medium.

In a first aspect, the disclosure provides a method for communication. The method is performed by a user equipment and includes: determining, based on a type of a hybrid automatic repeat request acknowledgment (HARQ-ACK) codebook, whether to send HARQ-ACK feedback information corresponding to a first semi-persistent scheduling physical downlink shared channel (SPS PDSCH) to a network device, in which a time-domain position of the first SPS PDSCH is located within an inactive period of a discontinuous transmission (DTX) of a cell of the network device.

In a second aspect, the disclosure provides a method for communication. The method is performed by a network device and includes: not sending a first SPS PDSCH during an inactive period of a DTX; and determining, based on a type of a HARQ-ACK codebook, whether to receive HARQ-ACK feedback information corresponding to the first SPS PDSCH sent by a user equipment.

In a third aspect, the disclosure provides a method for communication. The method includes: not sending, by a network device, a first SPS PDSCH during an inactive period of a DTX; determining, by a user equipment, based on a type of a HARQ-ACK codebook, whether to send HARQ-ACK feedback information corresponding to the first SPS PDSCH to the network device; and determining, by the network device, based on the type of the HARQ-ACK codebook, whether to receive the HARQ-ACK feedback information.

In a fourth aspect, the disclosure provides a first communication apparatus. The first communication apparatus includes: a processing module, configured to determine, based on a type of a HARQ-ACK codebook, whether to send HARQ-ACK feedback information corresponding to a first SPS PDSCH to a network device, in which a time-domain position of the first SPS PDSCH is located within an inactive period of a DTX of a cell of the network device.

In a fifth aspect, the disclosure provides a second communication apparatus. The second communication apparatus includes: a transceiver module, configured to not send a first SPS PDSCH during an inactive period of a DTX; and the transceiver module is further configured to determine, based on a type of a HARQ-ACK codebook, whether to receive HARQ-ACK feedback information corresponding to the first SPS PDSCH sent by a user equipment.

In a sixth aspect, the disclosure provides a communication device. The communication device includes: one or more processors, in which the one or more processors are configured to invoke instructions to cause the communication device to implement the method according to the first aspect, or to implement the method according to the second aspect.

In a seventh aspect, the disclosure provides a communication system. The communication system includes: a network device, configured to not send a first SPS PDSCH during an inactive period of a DTX; and a user equipment, configured to determine, based on a type of a HARQ-ACK codebook, whether to send HARQ-ACK feedback information corresponding to the first SPS PDSCH to the network device; the network device is further configured to receive or not receive the HARQ-ACK feedback information send by the user equipment, in which a time-domain position of the first SPS PDSCH is located within an inactive period of a DTX of a cell of the network device.

In an eighth aspect, the disclosure provides a storage medium. The storage medium stores instructions, in which the instructions, when executed on a communication device, cause the communication device to implement the method according to the first aspect, or to implement the method according to the second aspect.

### BRIEF DESCRIPTION OF THE DRAWINGS

The figures described here are used to provide further understanding of the embodiments of the disclosure and constitute a part of disclosure. The schematic embodiments of the embodiments of the disclosure and their descriptions are used to explain the embodiments of the disclosure and do not constitute improper limitations on the embodiments of the disclosure.

The figures here are incorporated into the specification and constitute a part of the specification, showing that they conform to the embodiments of the disclosure, and are used together with the specification to explain the principles of the embodiments of the disclosure.
FIG. 1 is a schematic diagram illustrating the architecture of a wireless communication system provided by an embodiment of the disclosure.
FIG. 2 is an interactive schematic diagram illustrating a communication method provided by an embodiment of the disclosure.
FIG. 3a is a flowchart illustrating a method for communication provided by an embodiment of the disclosure.
FIG. 3b is a flowchart illustrating a method for communication provided by an embodiment of the disclosure.
FIG. 3c is a flowchart illustrating a method for communication provided by an embodiment of the disclosure.
FIG. 3d is a flowchart illustrating a method for communication provided by an embodiment of the disclosure.
FIG. 3e is a flowchart illustrating a method for communication provided by an embodiment of the disclosure.
FIG. 4a is a flowchart illustrating a method for communication provided by an embodiment of the disclosure.
FIG. 4b is a flowchart illustrating a method for communication provided by an embodiment of the disclosure.
FIG. 4c is a flowchart illustrating a method for communication provided by an embodiment of the disclosure.
FIG. 4d is a flowchart illustrating a method for communication provided by an embodiment of the disclosure.
FIG. 4e is a flowchart illustrating a method for communication according to an embodiment of the disclosure.
FIG. 5a is a block diagram illustrating a first communication apparatus provided by an embodiment of the disclosure.
FIG. 5b is a block diagram illustrating a second communication apparatus provided by an embodiment of the disclosure.
FIG. 6a is a block diagram illustrating a communication device provided by an embodiment of the disclosure.
FIG. 6b is a block diagram illustrating a chip provided by an embodiment of the disclosure.

### DETAILED DESCRIPTION

Embodiments of the disclosure are further described below in conjunction with the accompanying figures and specific embodiments.

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the embodiments of the disclosure. Rather, they are merely examples of devices and methods consistent with some aspects of the disclosure as recited in the appended claims.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the disclosure, "plurality" refers to two or more.

In some embodiments, the terms "at least one of", "one or more", "a plurality of", "multiple" etc. may be used interchangeably.

In the embodiments of the disclosure, descriptions such as "at least one of A, B, C...", "A and/or B and/or C...", etc. include the case where any one of A, B, C... exists alone, and also include any combination of any multiple ones of A, B, C..., and each case may exist alone. For example, "at least one of A, B, or C" includes the case where A exists alone, the case where B exists alone, the case where C exists alone, the combination of A and B, the combination of A and C, the combination of B and C, and the combination of A, B, and C. For example, A and/or B includes the case where A exists alone, the case where B exists alone, and the combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal numbers before the "level" in the "first level" and the "second level" do not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is " apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in a case where...", "when...", "upon...", "if...", and "in the event that..." may be interchangeable.

In some embodiments, the terms such as "greater than", "greater than or equal to", "not less than", "more than", "more than or equal to", "not less than", "higher than", "higher than or equal to", "not lower than", and "above" may be replaced with each other, and the terms such as "less than", "less than or equal to", "not greater than", "less than", "less than or equal to", "no more than", "lower than", "lower than or equal to", "not higher than", and "below" may be replaced with each other.

In some embodiments, the apparatus may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be interchangeable.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be interchangeable.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be interchangeable.

In some embodiments, the access network device, the core network device, or the network device may be replaced by the terminal. For example, various embodiments of the disclosure may also be applied to a structure in which the communication between the access network device, the core network device, or the network device and the terminal is replaced by the communication between multiple terminals (for example, it may also be referred to as device-to-device (D2D), vehicle-to-everything (V2X), etc.). In this case, the terminal may be configured to have a structure that has all or part of functions of the access network device. In addition, the language such as "uplink" and "downlink" may also be replaced by the language corresponding to the communication between the terminals (for example, "sidelink"). For example, the uplink channel, the downlink channel, etc. may be replaced by the side channel, and the uplink, the downlink, etc. may be replaced by the sidelink.

In some embodiments, the terminal may be replaced by the access network device, the core network device, or the network device. In this case, the access network device, the core network device, or the network device may also be configured to have a structure that has all or part of functions of the terminal.

In some embodiments, "obtain", "acquire" " "get", "receive" , "transmit", and "send and/or receive" may be interchangeable, and may be interpreted as receiving from other entities, obtaining from a protocol, obtaining by self-processing, autonomous implementation, etc.

In some embodiments, the terms such as "send", "transmit", "report", "issue", "deliver", and "send and/or receive" may be interchangeable.

In some embodiments, "predetermined" or "preset" may be interpreted as being pre-specified in a protocol, etc., or as an action of being preset by an apparatus, or the like.

In some embodiments, "determining" may be interpreted broadly and may include, but is not limited to, actions as judging, deciding, calculating, computing, processing, deriving, investigating, searching, looking up, retrieving, inquiring, ascertaining, receiving" transmitting, inputting, outputting, accessing, resolving, selecting, choosing, establishing, comparing, assuming, expecting, considering, broadcasting, notifying, communicating, forwarding, configuring, reconfiguring, allocating, mapping, and assigning.

In some embodiments, the determination or judgment may be performed using a value represented by 1 bit (0 or 1), using a true/false value (Boolean value) represented by true or false, or by comparing numerical values (for example, comparing with a predetermined value), but is not limited to the above.

In some embodiments, "network" may be interpreted as apparatuses included in the network (e.g., access network device, core network device, etc.).

In some embodiments, "not expecting to receive" may be interpreted as not receiving on time domain resources and/or frequency domain resources, or as not performing subsequent processing on data, etc., after receiving the data; "not expecting to send" may be interpreted as not sending, or as sending but not expecting the recipient to respond to the sent content.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the disclosure may be implemented as an independent embodiment, and the combination of any elements, any rows, or any columns may also be implemented as an independent embodiment.

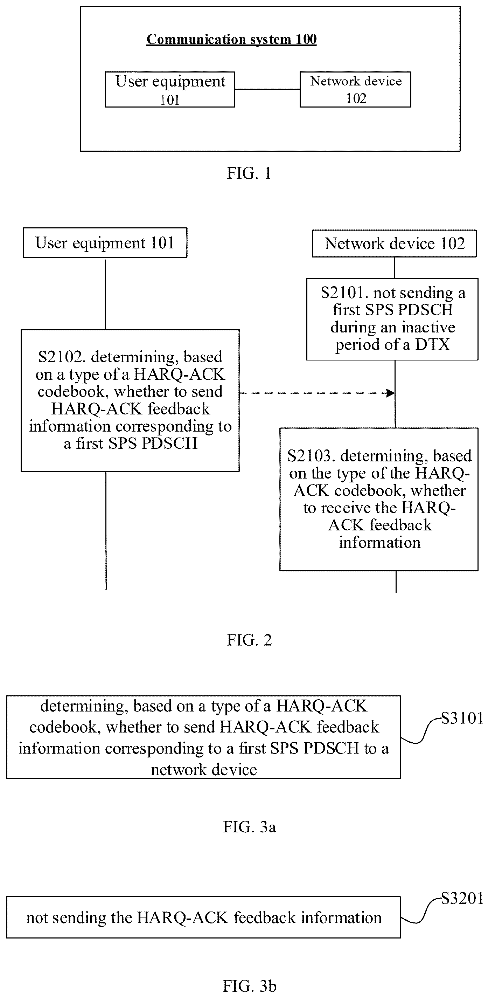

FIG. 1 is a schematic diagram illustrating functional block diagram of a wireless communication system according to an embodiment of the disclosure.

As shown in FIG. 1, the communication system 100 includes a user equipment 101 and a network device 102.

In some embodiments, the user equipment 101, for example, may include at least one of: a mobile phone, a wearable device, an internet of things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited to the above.

In some embodiments, the network device 102 may include at least one of an access network device or a core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited to the above.

In some embodiments, the technical solution of the disclosure may be applicable to an Open RAN architecture. In this case, the interfaces between or within the access network devices involved in the embodiments of the disclosure may become internal interfaces of the Open RAN, and the processes and information interactions between these internal interfaces may be implemented via software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited to the above.

In some embodiments, the core network device may be a device including one or more network elements, or may be a plurality of devices or device groups, each including all or part of one or more network elements. The network element may be virtual or physical. The core network may include, for example, at least one of an Evolved Packet Core (EPC), a 5G core network (5GCN), or a next-generation core (NGC).

It may be understood that the communication system described in the embodiments of the disclosure aims to more clearly illustrate the technical solution of the embodiments of the disclosure, and does not constitute a limitation on the technical solution proposed in the embodiments of the disclosure. A person skilled in the art may know that with the evolution of the system architecture and the emergence of new business scenarios, the technical solution proposed in the embodiments is also applicable to similar technical problems.

The following embodiments of the disclosure may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, a plurality of systems may also be combined (for example, a combination of LTE or LTE-A, and 5G, etc.) for application.

FIG. 2 is an interactive schematic diagram illustrating a communication method according to an embodiment of the disclosure. As shown in FIG. 2, an embodiment of the disclosure relates to a method for communication, configured in a communication system 100. The method includes the following steps S2101 to S2103.

At step S2101, a network device 102 does not send a first semi-persistent scheduling physical downlink shared channel (SPS PDSCH) during an inactive period of a discontinuous transmission (DTX).

In some embodiments, the network device 102 may configure the DTX on at least one carrier, with a cell or a carrier as a unit. During an inactive period of a DTX of a cell, the network device 102 may not send part or all of downlink channels on the cell. During an active period of a DTX of a cell, the network device 102 may send downlink channels on the cell.

In some embodiments, the DTX may be periodic or non-periodic.

In an example, the DTX may be configured with periodic time-domain parameters. The time-domain parameters include at least one of: a period, a start offset value, a duration of a first time period, or a duration of a second time period.

In another example, the network device 102 dynamically configures the duration of the first time period and the start offset value of the DTX.

In the above examples, the first time period may also be referred to as a DTX-Off period, and the first time period may be within the inactive period. The second time period may also be referred to as a DTX-On period, and the second time period may be within the active period.

In some embodiments, the network device 102 does not send an SPS PDSCH during the inactive period of the DTX of the cell.

In an example, the network device 102 may configure a periodic channel for transmitting downlink data for a user equipment 101 via higher-layer signaling. After a semi-persistent configuration related to the SPS PDSCH is activated, the periodic channel may send the SPS PDSCH periodically until the semi-persistent configuration related to the SPS PDSCH is deactivated or deconfigured. However, during the inactive period of the DTX, such as the DTX-Off period, the network device 102 does not send the SPS PDSCH.

In another example, for each SPS PDSCH, the user equipment 101 needs to perform hybrid automatic repeat request acknowledgment (HARQ-ACK) feedback.

In some embodiments, the first SPS PDSCH represents any SPS PDSCH whose time-domain position is within the inactive period of the DTX. For example, when a time-domain position of one or more SPS PDSCHs is located within the inactive period of the DTX, the implementation manner of the first SPS PDSCH may be referenced.

At step S2102, the user equipment 101 determines, based on a type of a HARQ-ACK codebook, whether to send HARQ-ACK feedback information corresponding to the first SPS PDSCH to the network device 102.

In some embodiments, a time-domain position of the first SPS PDSCH is located within an inactive period of a DTX of a cell of the network device.

In some embodiments, the network device 102 may configure different types of HARQ-ACK codebooks for the user equipment 101.

In some embodiments, the HARQ-ACK codebook includes three types: Type1 HARQ-ACK codebook, i.e., a semi-static HARQ-ACK codebook; Type2 HARQ-ACK codebook, i.e., a dynamic HARQ-ACK codebook; and Type3 HARQ-ACK codebook, i.e., a one-shot HARQ-ACK codebook.

A codebook size of the Type1 HARQ-ACK codebook does not dynamically change with actual data scheduling situations. The codebook size of the Type1 HARQ-ACK codebook is determined based on a number and time-domain positions of all preconfigured candidate PDSCH time-domain resources within a feedback window preconfigured by a base station. A codebook size of the Type2 HARQ-ACK codebook may be determined by the user equipment 101 based on scheduling situations. The codebook size of the Type2 HARQ-ACK codebook is determined based on the number of PDSCHs actually scheduled by the network device 102. The Type3 HARQ-ACK codebook indicates that the user equipment 101 performs a one-time feedback of HARQ-ACK feedback information corresponding to all HARQ processes configured by the base station. The codebook size of the Type3 HARQ-ACK codebook is determined based on a maximum number of HARQ processes configured by the base station.

It should be noted that, during the inactive period of the DTX, the network device 102 does not send the SPS PDSCH. Thus, the embodiment provides a manner for the user equipment 101 to perform HARQ-ACK feedback processing for the SPS PDSCH during the inactive period.

In some embodiments, when the type of the HARQ-ACK codebook is the first type, step S2102 may adopt step S2102-1 or step S2102-2.

At step S2102-1, the user equipment 101 does not send the HARQ-ACK feedback information.

In embodiments, the type of the HARQ-ACK codebook is a first type, and a first channel only transmits the HARQ-ACK feedback information corresponding to the first SPS PDSCH.

The first channel is a channel corresponding to the first SPS PDSCH and used for transmitting the HARQ-ACK feedback information of the first SPS PDSCH. The first channel is not used for transmitting the HARQ-ACK feedback information corresponding to channels other than the first SPS PDSCH.

In embodiments, the first channel may be a physical uplink control channel (PUCCH).

In embodiments, a channel other than the first SPS PDSCH may be, for example, a dynamically scheduled physical downlink shared channel (PDSCH).

In embodiments, when the type of the HARQ-ACK codebook is the first type, and the first channel only transmits the HARQ-ACK feedback information corresponding to the first SPS PDSCH, the user equipment 101 does not send the HARQ-ACK feedback information.

In embodiments, the user equipment 101 does not send the HARQ-ACK feedback information, meanings the HARQ-ACK feedback information of the first SPS PDSCH is discarded, or the HARQ-ACK codebook corresponding to the HARQ-ACK feedback information of the first SPS PDSCH is discarded.

In embodiments, when the user equipment 101 does not send the HARQ-ACK feedback information, it can still achieve effective power saving during the inactive period of the DTX of the network device 102.

It may be understood that when the type of the HARQ-ACK codebook is the first type, the codebook size does not change with scheduling. When the first channel is only used for transmitting the HARQ-ACK feedback information corresponding to the first SPS PDSCH, the HARQ-ACK codebook only includes a feedback value corresponding to the first SPS PDSCH. Thus, when the HARQ-ACK feedback information is not fed back, the HARQ-ACK codebook is discarded.

At step S2102-2, the user equipment 101 sends the HARQ-ACK feedback information to the network device 102.

In embodiments, the type of the HARQ-ACK codebook is a first type, and a first channel is used for transmitting HARQ-ACK feedback information corresponding to a first SPS PDSCH and HARQ-ACK feedback information corresponding to a second channel.

In embodiments, the second channel includes at least one of: downlink control information (DCI); or a dynamically scheduled PDSCH.

In embodiments, the first channel is used for transmitting the HARQ-ACK feedback information corresponding to the first SPS PDSCH and for transmitting the HARQ-ACK feedback information corresponding to the second channel, such as for transmitting the HARQ-ACK feedback information corresponding to the DCI, or the HARQ-ACK feedback information corresponding to the dynamically scheduled PDSCH.

In embodiments, when the type of the HARQ-ACK codebook is the first type, and the first channel corresponding to the first SPS PDSCH, used for transmitting the HARQ-ACK feedback information, is also used for transmitting the HARQ-ACK feedback information corresponding to the second channel, the user equipment 101 sends the HARQ-ACK feedback information to the network device 102.

In embodiments, the HARQ-ACK feedback information is a preset value.

In embodiments, the preset value is acknowledgement (ACK) information or negative acknowledgement (NACK) information.

In embodiments, the preset value may be defined by a protocol, or is configured by the network device 102.

It may be understood that in related art, the user equipment 101 determines the HARQ-ACK feedback information based on an actual situation of receiving SPS PDSCH data. In the scenario of the embodiment, the user equipment 101 feeds back the preset value, which is pre-defined or configured.

In an example, to ensure that the codebook size of the TYPE 1 HARQ-ACK codebook corresponding to the HARQ-ACK feedback information transmitted on the first channel remains unchanged, for example, the codebook size does not change due to the operation of a cell DTX mechanism by the network device 102, the embodiment fills a HARQ-ACK bit corresponding to the first SPS PDSCH in the TYPE 1 HARQ-ACK codebook corresponding to the first channel, and sets the HARQ-ACK feedback information corresponding to the first SPS PDSCH to a fixed preset value. For example, a bit value corresponding to the first SPS PDSCH filled in the TYPE 1 HARQ-ACK codebook is configured to 1, and the HARQ-ACK feedback information corresponds to the ACK information; or a bit value corresponding to the first SPS PDSCH filled in the TYPE 1 HARQ-ACK codebook is configured to 0, and the HARQ-ACK feedback information corresponds to the NACK information. Thus, the user equipment 101 may fed back a HARQ-ACK codebook with an unchanged codebook size, reducing processing complexity of the user equipment 101 during the feedback process.

In some embodiments, when the type of the HARQ-ACK codebook is the second type, step S2102 may adopt step S2102-3 or step S2102-4.

At step S2102-3, the user equipment 101 does not send the HARQ-ACK feedback information.

In embodiments, the user equipment 101 does not send the HARQ-ACK feedback information, and may also discard the HARQ-ACK feedback information corresponding to the first SPS PDSCH, or removing the HARQ-ACK feedback information corresponding to the first SPS PDSCH from the HARQ-ACK codebook corresponding to the first channel.

The first channel may be a PUCCH.

At steps S2102-4, the user equipment 101 sends the HARQ-ACK feedback information to the network device 102, in which the HARQ-ACK feedback information is a preset value.

In embodiments, the preset value is the ACK information or the NACK information.

In embodiments, the preset value may be defined by a protocol, or is configured by the network device 102.

In an example, to ensure that the codebook size of the TYPE 2 HARQ-ACK codebook corresponding to the HARQ-ACK feedback information transmitted on the first channel does not change due to the operation of the cell DTX mechanism, and to reduce complexity of the user equipment 101, the embodiment fills a HARQ-ACK bit corresponding to the first SPS PDSCH in the HARQ-ACK codebook corresponding to the first channel, and sets the HARQ-ACK information corresponding to the first SPS PDSCH to a fixed preset value.

It may be understood that when the HARQ-ACK feedback information corresponding to the first SPS PDSCH is not sent, the codebook size of the TYPE 2 HARQ-ACK codebook may change, for example, by removing the bits corresponding to the first SPS PDSCH from the HARQ-ACK codebook.

In some embodiments, when the type of the HARQ-ACK codebook is the third type, step S2102 may adopt step S2102-5.

At step S2102-5, the user equipment 101 sends the HARQ-ACK feedback information to the network device 102, in which the HARQ-ACK feedback information is a preset value.

In embodiments, the preset value is the ACK information or the NACK information.

In embodiments, the preset value may be defined by a protocol, or is configured by the network device 102.

In an example, to ensure that the codebook size of the TYPE 3 HARQ-ACK codebook corresponding to the HARQ-ACK feedback information transmitted on the first channel does not change due to the operation of the cell DTX mechanism, for example, the codebook size may still be determined based on the maximum number of HARQ processes configured by the base station, and to reduce complexity of the UE, the embodiment fills a HARQ-ACK bit position corresponding to the first SPS PDSCH in the HARQ-ACK codebook corresponding to the first channel, and sets the HARQ-ACK information corresponding to the first SPS PDSCH to a fixed preset value.

At step S2103: the network device 102 receives or does not receive the HARQ-ACK feedback information corresponding to the first SPS PDSCH sent by the user equipment 101.

In some embodiments, when the user equipment 101 sends the HARQ-ACK feedback information, the network device 102 normally receives the HARQ-ACK feedback information.

In a first example, when the type of the HARQ-ACK codebook is the first type, and the first channel only transmits the HARQ-ACK feedback information corresponding to the first SPS PDSCH, the user equipment 101 does not send the HARQ-ACK feedback information.

In the example, the network device 102 does not need to receive the HARQ-ACK feedback information.

In a second example, when the type of the HARQ-ACK codebook is the first type, and the first channel is used for transmitting the HARQ-ACK feedback information corresponding to the first SPS PDSCH and the HARQ-ACK feedback information corresponding to the second channel, the user equipment 101 sends the HARQ-ACK feedback information to the network device 102, and the HARQ-ACK feedback information is the preset value.

In the example, the network device 102 receives the HARQ-ACK feedback information.

In a third example, when the type of the HARQ-ACK codebook is the second type, the user equipment 101 does not send the HARQ-ACK feedback information. In the example, the network device 102 does not need to receive the HARQ-ACK feedback information.

In a fourth example, when the type of the HARQ-ACK codebook is the second type, the user equipment 101 sends the HARQ-ACK feedback information, and the HARQ-ACK feedback information is the preset value. In the example, the network device 102 receives the HARQ-ACK feedback information.

In a fifth example, when the type of the HARQ-ACK codebook is the third type, the user equipment 101 sends the HARQ-ACK feedback information, and the HARQ-ACK feedback information is the preset value. In the example, the network device 102 receives the HARQ-ACK feedback information.

In some embodiments, step S2101 and step S2103 are optional.

In some embodiments, the method may include step S2102.

In some embodiments, the method may include step S2101 and step S2102.

In some embodiments, the method may include step S2102 and step S2103.

In some embodiments, step S2102 has a plurality of optional implementation manners, for example, one of steps S2102-1 to S2102-5 may be adopted.

In an example, the method includes step S2101, S2102-1, and S2103.

In an example, the method includes step S2101, S2102-2, and S2103.

In an example, the method includes step S2101, S2102-3, and S2103.

In an example, the method includes step S2101, S2102-4, and S2103.

In an example, the method includes step S2101, S2102-5, and S2103.

In the embodiments of the disclosure, when the network device 102 is in the inactive period of the DTX, the user equipment 101 may process the HARQ-ACK feedback for the SPS PDSCH in different ways based on the type of the configured HARQ-ACK codebook. Thus, power consumption of the user equipment 101 may be saved in appropriate scenarios, or timely interaction with the network device 102 may be maintained.

FIG. 3a is a flowchart illustrating a method for communication according to an embodiment of the disclosure. As shown in FIG. 3a, an embodiment of the disclosure relates to a communication method for a user equipment 101. The method includes the following step S3101.

At step S3101, the user equipment 101 determines, based on a type of a configured HARQ-ACK codebook, whether to send HARQ-ACK feedback information corresponding to a first SPS PDSCH to a network device 102.

For an implementation manner of step S3101, reference may be made to the related implementation manner of step S2102, which is not repeated here.

In some embodiments, a time-domain position of the first SPS PDSCH is located within an inactive period of a DTX of a cell of the network device.

In some embodiments, the HARQ-ACK codebook includes three types: a first type, a second type, and a third type.

In some embodiments, when the type of the HARQ-ACK codebook is the first type, the user equipment 101 does not send the HARQ-ACK feedback information. For the embodiment, reference may be made to the related implementation manner of step S2102-1, which is not repeated here.

When the type of the HARQ-ACK codebook is the first type, the user equipment 101 may also send the HARQ-ACK feedback information which is a preset value. For the embodiment, reference may be made to the related implementation manner of step S2102-2, which is not repeated here.

In some embodiments, when the type of the HARQ-ACK codebook is the second type, the user equipment 101 does not send the HARQ-ACK feedback information. For the embodiment, reference may be made to the related implementation manner of step S2102-3, which is not repeated here.

In some embodiments, when the type of the HARQ-ACK codebook is the second type, the user equipment 101 may also send the HARQ-ACK feedback information which is a preset value. For the embodiment, reference may be made to the related implementation manner of step S2102-4, which is not repeated here.

In some embodiments, when the type of the HARQ-ACK codebook is the third type, the user equipment 101 may send the HARQ-ACK feedback information which is a preset value. For the embodiment, reference may be made to the related implementation manner of step S2102-5, which is not repeated here.

In some embodiments, the preset value corresponds to: ACK information or NACK information.

In some embodiments, the preset value is defined by a protocol, or is configured by the network device.

In the embodiments of the disclosure, when the network device 102 is in the inactive period of the DTX, the user equipment 101 may adaptively process the HARQ-ACK feedback for the SPS PDSCH in different ways based on the type of the configured HARQ-ACK codebook. Thus, power consumption of the user equipment 101 may be saved in appropriate scenarios, or timely interaction with the network device 102 may be maintained.

FIG. 3b is a flowchart illustrating a method for communication according to an embodiment of the disclosure. As shown in FIG. 3b, an embodiment of the disclosure relates to a method for communication, configured in a user equipment 101. The method includes the following step S3201.

At step S3201, the user equipment 101 does not send HARQ-ACK feedback information.

For an implementation manner of step S3201, reference may be made to the related implementation manner of step S2102-1 and S3101, which is not repeated here.

In some embodiments, when a type of the HARQ-ACK codebook is a first type, and a first channel only transmits the HARQ-ACK feedback information corresponding to a first SPS PDSCH, the user equipment 101 does not send the HARQ-ACK feedback information.

In the embodiment of the disclosure, the user equipment 101 does not perform HARQ-ACK feedback for the first SPS PDSCH, which is beneficial for achieving power saving of the user equipment 101.

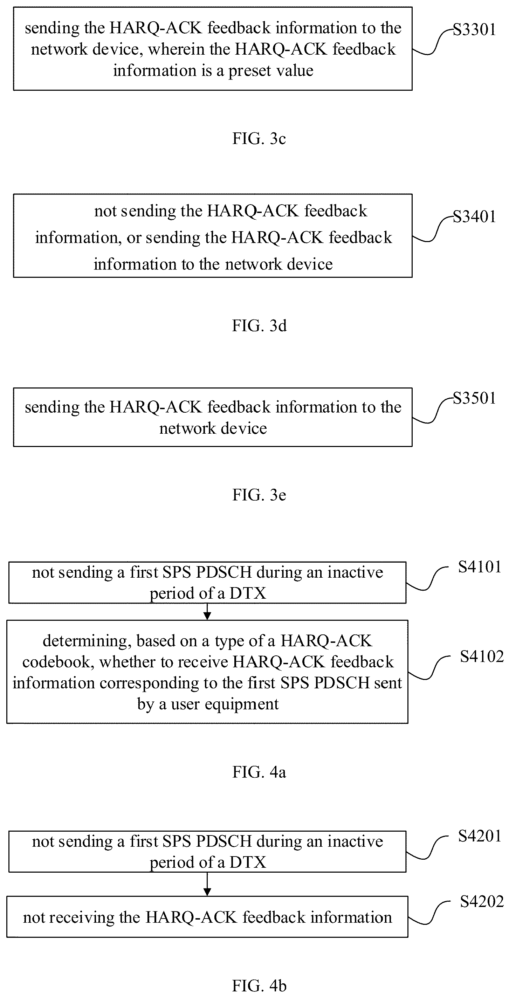

FIG. 3c is a flowchart illustrating a method for communication according to an embodiment of the disclosure. As shown in FIG. 3c, an embodiment of the disclosure relates to a communication method for a user equipment 101. The method includes the following step S3301.

At step S3301, the user equipment 101 sends HARQ-ACK feedback information to a network device 102, in which the HARQ-ACK feedback information is a preset value.

For an implementation manner of step S3301, reference may be made to the related implementation manner of step S2102-2 and S3101, which is not repeated here.

In some embodiments, when a type of the HARQ-ACK codebook is a first type, and a first channel is used for transmitting the HARQ-ACK feedback information corresponding to the first SPS PDSCH and the HARQ-ACK feedback information corresponding to a second channel, the user equipment 101 feeds back the preset value for the first SPS PDSCH.

In some embodiments, the second channel includes at least one of: DCI; or a dynamically scheduled PDSCH.

In some embodiments, the preset value corresponds to: ACK information or NACK information.

In some embodiments, the preset value is defined by a protocol, or is configured by the network device.

In the embodiment of the disclosure, the user equipment 101 may feed back a preset value. In a scenario where the network device 102 does not send the first SPS PDSCH, the preset value fed back by the user equipment 101 may be used by the network device 102 to promptly record or learn about the communication status of the user equipment 101. For example, for the preset value received during the inactive period of the DTX, the network device 102 may resume sending the SPS PDSCH corresponding to that preset value during the active period.

FIG. 3d is a flowchart illustrating a method for communication according to an embodiment of the disclosure. As shown in FIG. 3d, an embodiment of the disclosure relates to a communication method for a user equipment 101. The method includes the following step S3401.

At step S3401, the user equipment 101 does not send HARQ-ACK feedback information, or the user equipment 101 sends HARQ-ACK feedback information to a network device 102.

For an implementation manner of step S3401, reference may be made to the related implementation manners of step S2102-3, step S2102-4, and step S3101, which are not repeated here.

In some embodiments, when a type of the HARQ-ACK codebook is a second type, the user equipment 101 does not send the HARQ-ACK feedback information, or the user equipment 101 sends the HARQ-ACK feedback information to the network device 102.

In some embodiments, when the HARQ-ACK feedback information is sent, the HARQ-ACK feedback information is a preset value.

In some embodiments, the preset value corresponds to: ACK information or NACK information.

In some embodiments, the preset value is defined by a protocol, or is configured by the network device.

In the embodiment of the disclosure, the user equipment 101 does not perform HARQ-ACK feedback for the first SPS PDSCH, it is beneficial for achieving power saving of the user equipment 101. The scenario of feeding back the preset value is beneficial for the network device 102 to promptly learn about the communication status of the user equipment 101.

FIG. 3e is a flowchart illustrating a method for communication according to an embodiment of the disclosure. As shown in FIG. 3e, an embodiment of the disclosure relates to a communication method for a user equipment 101. The method includes the following step S3501.

At step S3501, the user equipment 101 sends HARQ-ACK feedback information to a network device 102.

For an implementation manner of step S3501, reference may be made to the related implementation manner of step S2102-5 and step S3101, which is not repeated here.

In some embodiments, when a type of the HARQ-ACK codebook is a third type, the user equipment 101 sends the HARQ-ACK feedback information to the network device 102.

In some embodiments, the HARQ-ACK feedback information is a preset value.

In some embodiments, the preset value corresponds to: ACK information or NACK information.

In some embodiments, the preset value is defined by a protocol, or is configured by the network device.

In the embodiment of the disclosure, the user equipment 101 feeding back the preset value is beneficial for the network device 102 to promptly learn about the communication status of the user equipment 101.

FIG. 4a is a flowchart illustrating a method for communication according to an embodiment of the disclosure. As shown in FIG. 4a, an embodiment of the disclosure relates to a communication method for a network device 102. The method includes the following steps S4101 to S4102.

At step S4101, the network device 102 does not send a first SPS PDSCH during an inactive period of a DTX.

For an implementation manner of step S4101, reference may be made to the related implementation manner of step S2101, which is not repeated here.

At step S4102, the network device 102 determines, based on a type of a HARQ-ACK codebook, whether to receive HARQ-ACK feedback information corresponding to the first SPS PDSCH sent by a user equipment 101.

For an implementation manner of step S4102, reference may be made to the implementation manner of step S2103, which is not repeated here.

In some embodiments, the user equipment 101 is configured to determine, based on a type of the configured HARQ-ACK codebook, whether to send the HARQ-ACK feedback information. For the implementation manner, reference may be made to the related descriptions in the various implementation manners of FIG. 2 to FIG. 3e, which are not repeated here.

In some embodiments, "does not receive" may also mean "does not expect to receive", which may mean not receiving on time-domain resources and/or frequency-domain resources, or may mean not performing subsequent processing on received data after receiving it.

In some embodiments, "does not send" may also mean "does not expect to receive", which may mean not sending on time-domain resources and/or frequency-domain resources, or may mean sending but not expecting the receiving side to respond to the sent content.

In some embodiments, when the type of the HARQ-ACK codebook is different, the user equipment 101 may not fed back the HARQ-ACK feedback information, or may fed back a preset value.

In some embodiments, the preset value corresponds to: ACK information or NACK information.

In some embodiments, the preset value is defined by a protocol, or is configured by the network device.

In the embodiment of the disclosure, the network device 102 does not send the first SPS PDSCH during the inactive period, and may determine whether to receive the HARQ-ACK feedback information corresponding to the first SPS PDSCH based on the communication situation of the user equipment 101. Thus, it is beneficial for promptly learning about the communication status of the user equipment 101 when receiving; and it may further achieve power saving of the network device 102 when not receiving.

FIG. 4b is a flowchart illustrating a method for communication according to an embodiment of the disclosure. As shown in FIG. 4b, an embodiment of the disclosure relates to a communication method for a network device 102. The method includes the following steps S4201 to S4202.

At step S4201, the network device 102 does not send a first SPS PDSCH during an inactive period of a DTX.

For an implementation manner of step S4201, reference may be made to the related implementation manner of step S2101, which is not repeated here.

At step S4202, the network device 102 does not receive HARQ-ACK feedback information.

For an implementation manner of step S4202, reference may be made to the implementation manner of step S2103, which is not repeated here.

In some embodiments, when a type of the HARQ-ACK codebook is a first type, and a first channel only transmits the HARQ-ACK feedback information corresponding to the first SPS PDSCH, the network device 102 does not receive the HARQ-ACK feedback information.

In the embodiment of the disclosure, the network device 102 does not receive the HARQ-ACK feedback information, thereby eliminating unnecessary network operations and further achieving power saving.

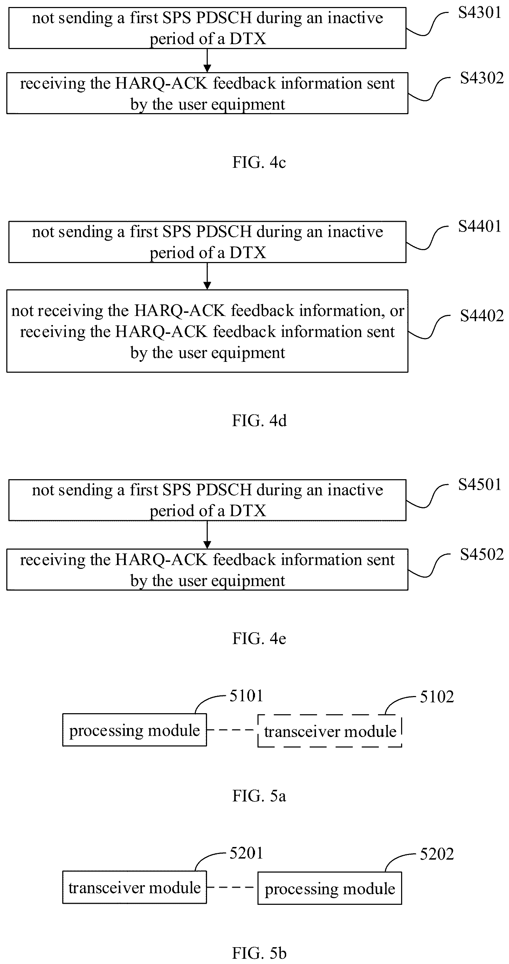

FIG. 4c is a flowchart illustrating a method for communication according to an embodiment of the disclosure. As shown in FIG. 4c, an embodiment of the disclosure relates to a communication method fora network device 102. The method includes the following steps S4301 to S4302.

At step S4301, the network device 102 does not send a first SPS PDSCH during an inactive period of a DTX.

For an implementation manner of step S4301, reference may be made to the related implementation manner of step S2101, which is not repeated here.

At step S4302, the network device 102 receives HARQ-ACK feedback information sent by a user equipment 101.

For an implementation manner of step S4302, reference may be made to the implementation manner of step S2103, which is not repeated here.

In some embodiments, when a type of a HARQ-ACK codebook is a first type, and a first channel is used for transmitting the HARQ-ACK feedback information corresponding to the first SPS PDSCH and the HARQ-ACK feedback information corresponding to a second channel, the network device 102 receives the HARQ-ACK feedback information.

In some embodiments, the HARQ-ACK feedback information is a preset value.

In some embodiments, the preset value corresponds to: ACK information or NACK information.

In some embodiments, the preset value is defined by a protocol, or is configured by the network device.

In some embodiments, the second channel includes at least one of: DCI; or a dynamically scheduled PDSCH.

In the embodiment of the disclosure, when the network device 102 receives the preset value corresponding to the first SPS PDSCH during the inactive period of the DTX, it may be used only for recording or learning the communication status during the inactive period, without affecting scheduling during the inactive period. The network device 102 may still maintain a power saving state.

FIG. 4d is a flowchart illustrating a method for communication according to an embodiment of the disclosure. As shown in FIG. 4d, an embodiment of the disclosure relates to a communication method for a network device 102. The method includes the following steps S4401 to S4402.

At step S4401, the network device 102 does not send a first SPS PDSCH during an inactive period of a DTX.

For an implementation manner of step S4401, reference may be made to the related implementation manner of step S2101, which is not repeated here.

At step S4402, the network device 102 does not receive HARQ-ACK feedback information, or receives HARQ-ACK feedback information sent by the user equipment 101.

For an implementation manner of step S4402, reference may be made to the implementation manner of step S2103, which is not repeated here.

In some embodiments, when a type of a HARQ-ACK codebook is a second type, the network device 102 does not receive or receives the HARQ-ACK feedback information.

In some embodiments, when the HARQ-ACK feedback information is received, the HARQ-ACK feedback information is a preset value.

In some embodiments, the preset value corresponds to: ACK information or NACK information.

In some embodiments, the preset value is defined by a protocol, or is configured by the network device.

In the embodiment of the disclosure, the network device 102 performs corresponding receiving or not receiving operations based on whether the user equipment 101 sends the HARQ-ACK feedback information. Thus, power saving of the network device 102 may be maintained, or the communication status of the user equipment 101 may be promptly learned.

FIG. 4e is a flowchart illustrating a method for communication according to an embodiment of the disclosure. As shown in FIG. 4e, an embodiment of the disclosure relates to a communication method for a network device 102. The method includes the following steps S4501 to S4502.

At step S4501, the network device 102 does not send a first SPS PDSCH during an inactive period of a DTX.

For an implementation manner of step S4501, reference may be made to the related implementation manner of step S2101, which is not repeated here.

At step S4502, the network device 102 receives the HARQ-ACK feedback information sent by the user equipment 101.

For an implementation manner of step S4502, reference may be made to the implementation manner of step S2103, which is not repeated here.

In some embodiments, when a type of a HARQ-ACK codebook is a third type, the user equipment 101 sends the HARQ-ACK feedback information to the network device 102, and the network device 102 receives the HARQ-ACK feedback information.

In some embodiments, the HARQ-ACK feedback information is a preset value.

In some embodiments, the preset value corresponds to: ACK information or NACK information.

In some embodiments, the preset value is defined by a protocol, or is configured by the network device.

In the embodiment of the disclosure, the network device 102 receiving the preset value is beneficial for promptly recording or learning the communication status of the user equipment 101.

To facilitate understanding of the embodiments of the disclosure, some specific examples are listed below.

### Example 1.

If a time-domain position of an SPS PDSCH is located within an inactive region of a DTX of a cell, then HARQ-ACK information corresponding to the SPS PDSCH is not fed back, or preset HARQ-ACK information is fed back for the SPS PDSCH.

In some embodiments, the SPS PDSCH corresponds to the first SPS PDSCH in the above embodiments.

In some embodiments, the preset HARQ-ACK information corresponds to the preset value in the above embodiments.

### Example 2.

If a UE is configured with a Type1 HARQ-ACK codebook (a semi-static HARQ-ACK codebook) and a HARQ-ACK PUCCH channel corresponding to the SPS PDSCH only transmits HARQ-ACK corresponding to one or more SPS PDSCHs, then the UE does not fed back the HARQ-ACK information corresponding to the SPS PDSCH. Alternatively, the HARQ-ACK information corresponding to the SPS PDSCH is discarded, or the HARQ-ACK codebook corresponding to the SPS PDSCH is discarded or removed.

In some embodiments, the PUCCH channel corresponds to the first channel in the above embodiments.

### Example 3.

If a UE is configured with the Type1 HARQ-ACK codebook, and a HARQ-ACK PUCCH channel corresponding to the SPS PDSCH transmits HARQ-ACK corresponding to other PDSCHs or DCI besides the SPS PDSCH, then the UE feeds back ACK information or NACK information as the HARQ-ACK information for the SPS PDSCH.

The other PDSCHs are, for example, dynamically scheduled PDSCHs.

### Example 4.

If a UE is configured with a Type2 HARQ-ACK codebook (a dynamic HARQ-ACK codebook), then the UE feeds back preset HARQ-ACK information for the HARQ-ACK information of the SPS PDSCH, and the preset HARQ-ACK information may be the ACK information or the NACK information.

Alternatively, the UE does not fed back the HARQ-ACK information corresponding to the SPS PDSCH, or the HARQ-ACK information corresponding to the SPS PDSCH is discarded, or the HARQ-ACK information corresponding to the SPS PDSCH is removed from the HARQ-ACK codebook corresponding to the HARQ-ACK PUCCH.

### Example 5.

If a UE is configured with a Type3 HARQ-ACK codebook (a one-shot HARQ-ACK codebook), then the UE feeds back the ACK information or the NACK information as the HARQ-ACK information for the SPS PDSCH.

In the embodiments of the disclosure, for some or all steps, their optional implementations may be arbitrarily combined with some or all steps in other embodiments, and may also be arbitrarily combined with optional implementations of other embodiments.

The embodiments of the disclosure also provide an apparatus for implementing any one of the above methods. For example, an apparatus is provided, including units or modules for performing steps executed by the terminal in any one of the above methods. Further, another apparatus is provided, including units or modules for performing steps executed by the network device (e.g., an access network device, a core network function node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or modules in the apparatus may be implemented in a form of software invoked by a processor: for example, the apparatus includes a processor, in which the processor is connected to a memory storing instructions. The processor invokes the instructions stored in the memory to implement any one of the above methods or to implement functions of the units or modules of the above apparatus. The processor is, for example, a general-purpose processor, such as a central processing unit (CPU) or a microprocessor, and the memory is a memory inside the apparatus or a memory outside the apparatus. Or, the units or modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. Connection relationships between the logic gate circuits are configured via configuration files to implement the functions of some or all units or modules. All units or modules of the above apparatus may be fully implemented in a form of software invoked by the processor, or fully implemented in a form of the hardware circuit, or partially implemented in a form of software invoked by the processor and partially implemented in a form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconfigurable, for example, a hardware circuit implemented by an ASIC or a PLD, such as an FPGA. In a reconfigurable hardware circuit, a process that the processor loads a configuration document to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 5a is a block diagram illustrating a first communication apparatus according to an embodiment of the disclosure. As shown in FIG. 5a, the first communication apparatus includes: a processing module 5101, configured to determine, based on a type of a HARQ-ACK codebook, whether to send HARQ-ACK feedback information corresponding to a first SPS PDSCH to a network device, in which a time-domain position of the first SPS PDSCH is located within an inactive period of a DTX of a cell of the network device. In embodiments, the processing module 5101 is configured to perform the steps related to processing and message generation performed by the user equipment 101 in any of the above methods, which are not repeated here.

In embodiments, the first communication apparatus further includes: a transceiver module 5102. The transceiver module 5102 is configured to perform the steps related to message transmission and reception performed by the user equipment 101 in any of the above methods, which are not repeated here.

FIG. 5b is a block diagram illustrating a second communication apparatus according to an embodiment of the disclosure. As shown in FIG. 5b, the second communication apparatus includes: a transceiver module 5201, configured to not send a first SPS PDSCH during an inactive period of a DTX; and the transceiver module 5201 is further configured to determine, based on a type of a HARQ-ACK codebook, whether to receive HARQ-ACK feedback information corresponding to the first SPS PDSCH sent by a user equipment. In embodiments, the transceiver module 5201 is configured to perform the steps related to transmission and reception performed by the network device 102 in any of the above methods, which are not repeated here.

In embodiments, the second communication apparatus further includes: a processing module 5202. The processing module 5202 is configured to perform the steps related to processing performed by the network device 102 in any of the above methods, such as steps related to generation and computational processing of the message, which are not repeated here.

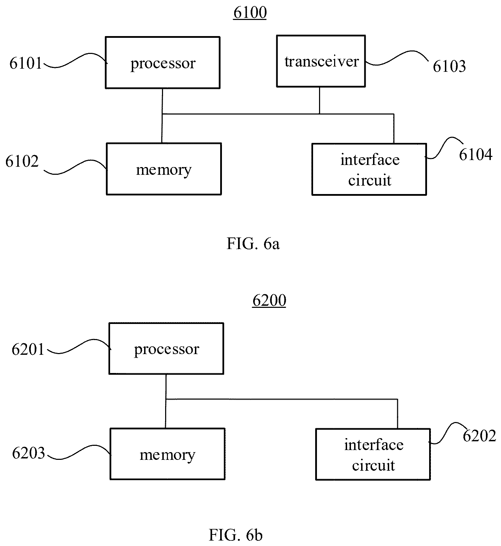

FIG. 6a is a block diagram of a communication device 6100 according to an embodiment of the disclosure. The communication device 6100 may be a network device (such as an access network device, a core network device, etc.), or a terminal (such as a user equipment, etc.), or a chip, a chip system, a processor, etc. that supports the network device to implement any one of the methods, or a chip, a chip system, a processor, etc. that supports the terminal to implement any one of the methods. The communication device 6100 is configured to implement the method in the above method embodiments. For details, please refer to the description in the above method embodiments.

As shown in FIG. 6a, the communication device 6100 may include one or more processors 6101. The processor 6101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The processor 6101 is configured to invoke instructions so that the communication device 6100 may implement any one of the above methods.

In embodiments, the communication device 6100 may also include one or more memories 6102 for storing instructions. In embodiments, all or some of the memories 6102 may also be located outside the communication device 6100.

In some embodiments, the communication device 6100 further includes one or more transceivers 6103. When the communication device 6100 includes one or more transceivers 6103, communication steps such as sending and receiving in the above methods are performed by the transceiver 6103, and other steps are performed by the processor 6101.

In some embodiments, the transceiver may include a receiver and a transmitter, which may be separate or integrated together. In embodiments, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

In embodiments, the communication device 6100 further includes one or more interface circuits 6104. The interface circuit 6104 is connected to the memory 6102. The interface circuit 6104 may be configured to receive signals from the memory 6102 or other devices, and may be configured to send signals to the memory 6102 or other devices. For example, the interface circuit 6104 may read instructions stored in the memory 6102 and send the instructions to the processor 6101.

The communication device 6100 in the above embodiments may be a network device or a terminal, but a scope of the communication device 6100 in the disclosure is not limited to this, and a structure of the communication device 6100 may not be limited by FIG. 6a. The communication device may be an independent device or part of a larger device. For example, the communication device may be: 1) an independent IC, or a chip, or a chip system or a subsystem; 2) a collection including one or more IC, in embodiments, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 6b is a block diagram of a chip 6200 according to an embodiment of the disclosure. For a case where the communication device 6100 may be a chip or a chip system, reference may be made to the block diagram of the chip 6200 shown in FIG. 6b, which it is not limited to this. The chip 6200 includes one or more processors 6201. The processor 6201 is configured to invoke the instructions to cause the chip 6200 to execute any one of the above methods.

In some embodiments, the chip 6200 further includes one or more interface circuits 6202. The interface circuit 6202 is connected to a memory 6203. The interface circuit 6202 may be configured to receive signals from the memory 6203 or other devices, and may be configured to send signals to the memory 6203 or other devices. For example, the interface circuit 6202 may read the instructions stored in the memory 6203 and send the instructions to the processor 6201. In embodiments, terms such as interface circuit, interface, transceiver pin, transceiver, etc. may be used interchangeably.

In some embodiments, the chip 6200 further includes one or more memories 6203 for storing instructions. In embodiments, all or some of the memories 6203 may be located outside the chip 6200.

The disclosure also provides a storage medium for storing instructions. When the instructions are running on the communication device 6100, the communication device 6100 is caused to implement any one of the above methods. In embodiments, the above storage medium is an electronic storage medium. In embodiments, the above storage medium is a computer-readable storage medium, which is not limited to this, and the above storage medium may also be a storage medium readable by other devices. In embodiments, the above storage medium may be a non-transitory storage medium, which is not limited to this, and the above storage medium may also be a transitory storage medium.

The disclosure also provides a program product. When the program product is executed by the communication device 6100, the communication device 6100 is caused to implement any one of the above methods. In embodiments, the above program product is a computer program product.

The disclosure also provides a computer program. When the computer program is running on a computer, the computer is caused to implement any one of the above methods.

### Industrial utility

In methods of the disclosure, when the network device is in the inactive period of the DTX, the user equipment may, based on the type of the configured HARQ-ACK codebook, process the HARQ-ACK feedback for the SPS PDSCH in different ways. Thus, power consumption of the user equipment may be saved in appropriate scenarios, or timely interaction with the network device may be maintained.

## Claims

1. A method for communication, performed by a user equipment, comprising:
determining, based on a type of a hybrid automatic repeat request acknowledgment (HARQ-ACK) codebook, whether to send HARQ-ACK feedback information corresponding to a first semi-persistent scheduling physical downlink shared channel (SPS PDSCH) to a network device,
wherein a time-domain position of the first SPS PDSCH is located within an inactive period of a discontinuous transmission (DTX) of a cell of the network device.

2. The method according to claim 1, wherein determining, based on the type of the HARQ-ACK codebook, whether to send the HARQ-ACK feedback information corresponding to the first SPS PDSCH to the network device comprises:
not sending the HARQ-ACK feedback information,
wherein the type of the HARQ-ACK codebook is a first type, and a first channel only transmits the HARQ-ACK feedback information corresponding to the first SPS PDSCH.

3. The method according to claim 1, wherein determining, based on the type of the HARQ-ACK codebook, whether to send the HARQ-ACK feedback information corresponding to the first SPS PDSCH to the network device comprises:
sending the HARQ-ACK feedback information to the network device, wherein the HARQ-ACK feedback information is a preset value,
wherein the type of the HARQ-ACK codebook is a first type, and a first channel is used for transmitting the HARQ-ACK feedback information corresponding to the first SPS PDSCH and the HARQ-ACK feedback information corresponding to a second channel.

4. The method according to claim 3, wherein the second channel comprises at least one of:
downlink control information (DCI); or
a dynamically scheduled physical downlink shared channel (PDSCH).

5. The method according to claim 1, wherein determining, based on the type of the HARQ-ACK codebook, whether to send the HARQ-ACK feedback information corresponding to the first SPS PDSCH to the network device comprises:
not sending the HARQ-ACK feedback information, or
sending the HARQ-ACK feedback information to the network device, wherein the HARQ-ACK feedback information is a preset value,
wherein the type of the HARQ-ACK codebook is a second type.

6. The method according to claim 1, wherein determining, based on the type of the HARQ-ACK codebook, whether to send the HARQ-ACK feedback information corresponding to the first SPS PDSCH to the network device comprises:
sending the HARQ-ACK feedback information to the network device, wherein the HARQ-ACK feedback information is a preset value, and the type of the HARQ-ACK codebook is a third type.

7. The method according to any one of claims 3 to 6, wherein the preset value of the first information corresponds to: acknowledgment (ACK) information in the HARQ-ACK feedback information or negative acknowledgement (NACK) information in the HARQ-ACK feedback information.

8. The method according to any one of claims 3 to 7, wherein the preset value is defined by a protocol, or is configured by the network device.

9. A method for communication, performed by a network device, comprising:
not sending a first semi-persistent scheduling physical downlink shared channel (SPS PDSCH) during an inactive period of a discontinuous transmission (DTX); and
determining, based on a type of a hybrid automatic repeat request acknowledgment (HARQ-ACK) codebook, whether to receive HARQ-ACK feedback information corresponding to the first SPS PDSCH sent by a user equipment.

10. The method according to claim 9, wherein determining, based on the type of the HARQ-ACK codebook, whether to receive the HARQ-ACK feedback information corresponding to the first SPS PDSCH sent by the user equipment comprises:
not receiving the HARQ-ACK feedback information,
wherein the type of the HARQ-ACK codebook is a first type, and a first channel only transmits the HARQ-ACK feedback information corresponding to the first SPS PDSCH.

11. The method according to claim 9, wherein determining, based on the type of the HARQ-ACK codebook, whether to receive the HARQ-ACK feedback information corresponding to the first SPS PDSCH sent by the user equipment comprises:
receiving the HARQ-ACK feedback information sent by the user equipment,
wherein the HARQ-ACK feedback information is a preset value, the type of the HARQ-ACK codebook is a first type, and a first channel is used for transmitting the HARQ-ACK feedback information corresponding to the first SPS PDSCH and the HARQ-ACK feedback information corresponding to a second channel.

12. The method according to claim 11, wherein the second channel comprises at least one of:
downlink control information (DCI); or
a dynamically scheduled physical downlink shared channel (PDSCH).

13. The method according to claim 9, wherein determining, based on the type of the HARQ-ACK codebook, whether to receive the HARQ-ACK feedback information corresponding to the first SPS PDSCH sent by the user equipment comprises:
not receiving the HARQ-ACK feedback information, or
receiving the HARQ-ACK feedback information sent by the user equipment,
wherein the HARQ-ACK feedback information is a preset value and the type of the HARQ-ACK codebook is a second type.

14. The method according to claim 9, wherein determining, based on the type of the HARQ-ACK codebook, whether to receive the HARQ-ACK feedback information corresponding to the first SPS PDSCH sent by the user equipment comprises:
receiving the HARQ-ACK feedback information sent by the user equipment,
wherein the HARQ-ACK feedback information is a preset value and the type of the HARQ-ACK codebook is a third type.

15. The method according to any one of claims 11 to 14, wherein the preset value corresponds to: acknowledgment (ACK) information or negative acknowledgement (NACK) information.

16. The method according to any one of claims 11 to 15, wherein the preset value is defined by a protocol, or is configured by the network device.

17. A method for communication, comprising:
not sending, by a network device, a first semi-persistent scheduling physical downlink shared channel (SPS PDSCH) during an inactive period of a discontinuous transmission (DTX);
determining, by a user equipment, based on a type of a hybrid automatic repeat request acknowledgment (HARQ-ACK) codebook, whether to send HARQ-ACK feedback information corresponding to the first SPS PDSCH to the network device; and
determining, by the network device, based on the type of the HARQ-ACK codebook, whether to receive the HARQ-ACK feedback information.

18. A first communication apparatus, comprising:
a processing module, configured to determine, based on a type of a hybrid automatic repeat request acknowledgment (HARQ-ACK) codebook, whether to send HARQ-ACK feedback information corresponding to a first semi-persistent scheduling physical downlink shared channel (SPS PDSCH) to a network device,
wherein a time-domain position of the first SPS PDSCH is located within an inactive period of a discontinuous transmission (DTX) of a cell of the network device.

19. A second communication apparatus, comprising:
a transceiver module, configured to not send a first semi-persistent scheduling physical downlink shared channel (SPS PDSCH) during an inactive period of a discontinuous transmission (DTX); and
the transceiver module is further configured to determine, based on a type of a hybrid automatic repeat request acknowledgment (HARQ-ACK) codebook, whether to receive HARQ-ACK feedback information corresponding to the first SPS PDSCH sent by a user equipment.

20. A communication device, comprising:
one or more processors;
wherein the one or more processors are configured to invoke instructions to cause the communication device to implement the method according to any one of claims 1 to 8, or to implement the method according to any one of claims 9 to 16.

21. A communication system, comprising:
a network device, configured to not send a first semi-persistent scheduling physical downlink shared channel (SPS PDSCH) during an inactive period of a discontinuous transmission (DTX); and
a user equipment, configured to determine, based on a type of a hybrid automatic repeat request acknowledgment (HARQ-ACK) codebook, whether to send HARQ-ACK feedback information corresponding to the first SPS PDSCH to the network device;
the network device is further configured to determine, based on the type of the HARQ-ACK codebook, whether to receive the HARQ-ACK feedback information,
wherein a time-domain position of the first SPS PDSCH is located within an inactive period of a DTX of a cell of the network device.

22. A storage medium storing instructions, wherein the instructions, when executed on a communication device, cause the communication device to implement the method according to any one of claims 1 to 8, or to implement the method according to any one of claims 9 to 16.
